(19) Europäisches Patentamt
European Patent Office
Office européen des brevets

(11) Veröffentlichungsnummer : **0 091 019**
**B1**

(12) # EUROPÄISCHE PATENTSCHRIFT

(45) Veröffentlichungstag der Patentschrift : **17.07.85**

(51) Int. Cl.⁴ : **C 09 B 33/02**, C 10 L 1/00

(21) Anmeldenummer : **83102915.2**

(22) Anmeldetag : **24.03.83**

(54) **Disazofarbstoffe.**

(30) Priorität : **02.04.82 DE 3212241**

(43) Veröffentlichungstag der Anmeldung : **12.10.83 Patentblatt 83/41**

(45) Bekanntmachung des Hinweises auf die Patenterteilung : **17.07.85 Patentblatt 85/29**

(84) Benannte Vertragsstaaten : **BE DE FR GB IT NL**

(56) Entgegenhaltungen :
**EP-A- 0 012 297**
**DE-A- 1 619 319**
**DE-A- 2 018 937**
**US-A- 3 350 384**

(73) Patentinhaber : **BASF Aktiengesellschaft**
**Carl-Bosch-Strasse 38**
**D-6700 Ludwigshafen (DE)**

(72) Erfinder : **Armbrust, Herbert**
**Johann-Sebastian-Bach-Strasse 6**
**D-6718 Gruenstadt (DE)**
Erfinder : **Dix, Johannes Peter, Dr.**
**Ludwigshafener Strasse 125**
**D-6708 Neuhofen (DE)**
Erfinder : **Hansen, Guenter, Dr.**
**Alwin-Mittasch-Platz 8**
**D-6700 Ludwigshafen (DE)**
Erfinder : **Zeidler, Georg**
**Mutterstadter Strasse 7**
**D-6701 Dannstadt-Schauernheim (DE)**

**EP 0 091 019 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel I

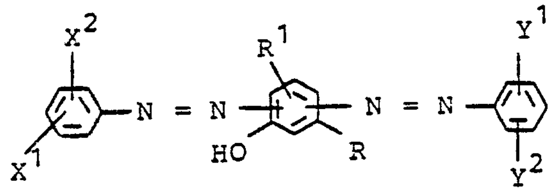

(I)

in der

R Hydroxy oder gegebenenfalls substituiertes Amino,

$R^1$ Wasserstoff oder $C_1$- bis $C_{12}$-Alkyl,

$X^1$ und $Y^1$ unabhängig voneinander eine Carbonester- oder Ethergruppe und

$X^2$ und $Y^2$ unabhängig voneinander Wasserstoff, Nitro oder Chlor sind.

Gegebenenfalls substituierte Aminoreste R sind neben $NH_2$ z. B. solche mit 1 bis 15 C-Atomen, wie $NHCH_3$, $NH—C_2H_5$, $NH—C_3H_7$, $NH—C_4H_9$, $NHC_5H_{11}$, $NHC_6H_{13}$, $NH—C_7H_{15}$, $NH—C_8H_{17}$, $NH—C_9H_{19}$, $NH—C_{10}H_{21}$ · $NH—C_{11}H_{23}$, $NHC_{12}H_{25}$ oder $NH—C_{13}H_{27}$, wobei die Alkylreste gradkettig oder verzweigt sein können.

Für $R^1$ sind im Rahmen der Kohlenstoffzahl 1 bis 13 die gleichen Alkylreste wie für die Aminsubstituenten R zu nennen.

Ethergruppen $X^1$ und/oder $Y^1$ sind insbesondere solche mit 1 bis 15 C-Atomen, deren Kohlenstoffkette noch durch Sauerstoff unterbrochen sein kann. Im einzelnen seien beispielsweise genannt : $OCH_3$, $OC_2H_5$, $OC_3H_7$, $OC_4H_9$, $OC_5H_{11}$, $OC_6H_{13}$, $OC_7H_{15}$, $OC_8H_{17}$, $OC_9H_{19}$, $OC_{10}H_{21}$, $OC_{11}H_{23}$, $OC_{12}H_{25}$ oder $OC_{13}H_{27}$ sowie $OC_2H_4OC_4H_9$, $OC_2H_4C_2H_5$ oder $O(C_2H_4)OC_4H_9$.

Für die Carbonesterreste $X^1$ und $Y^1$ kommen als Alkoholreste die für $X^1$ und $Y^1$ genannten Alkoxyreste und darüberhinaus z. B. noch folgende Reste in Betracht : $OC_6H_5$, $OC_6H_4CH_3$, $OC_6H_4C_2H_5$, $OC_6H_4C_3H_7$, $OC_6H_4C_4H_9$, $OC_6H_4C_9H_{19}$ oder $OC_6H_4C_{12}H_{25}$.

Zur Herstellung der Verbindungen der Formel I kann man Diazoniumverbindungen von Aminen der Formel II

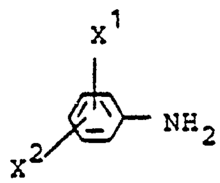

und

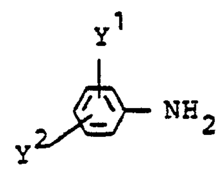

mit Kupplungskomponenten der Formel III

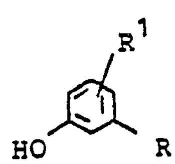

in an sich bekannter Weise umsetzen. Einzelheiten können den Beispielen entnommen werden, in denen sich Angaben über Teile und Prozente, sofern nicht anders vermerkt, auf das Gewicht beziehen.

Die Verbindungen der Formel I sind gelb bis rot und eignen sich insbesondere zum Färben von Mineralölprodukten, Lösungsmitteln und Benzinadditiven wie Bleitetraethyl, da sie in diesen Flüssigkeiten sehr gut löslich sind. Sie dienen daher im wesentlichen als Markierungssubstanzen.

Von besonderer Bedeutung sind Verbindungen der Formel Ia,

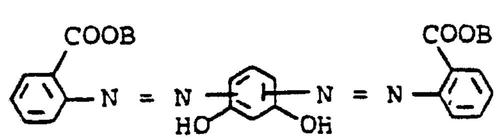

(Ia)

in der

B ein ggf. verzweigter $C_5$- bis $C_{15}$-, vorzugsweise $C_8$- bis $C_{15}$-Alkylrest, der noch durch Sauerstoff unterbrochen sein kann oder ein substituierter Phenylrest ist. Einzelne bevorzugte Reste B sind

beispielsweise: $C_5H_{11}$, $C_6H_{13}$, $C_7H_{15}$, $C_8H_{17}$, $C_9H_{19}$, $C_{10}H_{11}$, $C_{11}H_{23}$, $C_{12}H_{25}$, $C_{13}H_{27}$, $C_2H_4OC_3H_7$, $C_2H_4OC_4H_9$, $C_2H_4OC_2H_4OC_3H_7$, $-CH(CH_3)-CH_2-OC_4H_9$, $-CH(C_2H_5)-CH_2-O-C_2H_5$, $-CH(C_2H_5)-CH_2-O-C_3H_7$,

$-CH(C_2H_5)-CH_2-O-C_4H_9$, 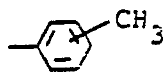, 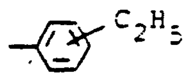, 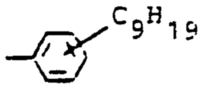

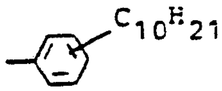 oder 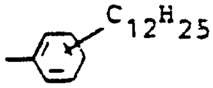

Die Erfindung betrifft weiterhin Mischungen von Verbindungen der Formeln I und Ia, wie sie z. B. durch Mischkupplung bei Verwendung mehrerer Diazo- und/oder Kupplungskomponenten entstehen. Gegenüber einzelnen Verbindungen zeichnen sich die Mischungen in der Regel durch gesteigerte Löslichkeit aus.

Aus der US-A-3 350 384 sind vergleichbare Verbindungen bekannt, die an den Diazokomponenten Alkylreste tragen. Gegenüber diesen Farbstoffen zeichnen sich die erfindungsgemäßen Verbindungen durch eine unerwartete Steigerung der Löslichkeit in Kohlenwasserstoffen aus, die für den vorgesehenen Verwendungszweck sehr wertvoll ist.

## Beispiel 1

82 Teile Anthranilsäureisononylester in 75 Raumteilen Toluol wurden zu einem Gemisch aus 75 Raumteilen 32 %iger Salzsäure und 300 Teilen Eis gegeben. Unter Rühren wurden 21 Teile Natriumnitrit in 60 Teilen Wasser unterhalb 5 °C zugetropft. Man ließ 1,5 Stunden bei maximal 5 °C rühren, zerstörte überschüssiges Nitrit mit wenig Amidosulfonsäure und trug 16,5 Teile Resorcin ein. Mit Natriumacetat wurde auf pH 4 abgepuffert und nach Beendigung der Kupplung mit 75 Raumteilen Toluol versetzt. Nach der Abtrennung der wäßrigen Phase und zweimaligem Waschen mit je 300 Teilen Wasser wurde die organische Phase isoliert und das Lösungsmittel im Vakuum abdestilliert. Hiernach wurden 104 Teile des Farbstoffs der Formel

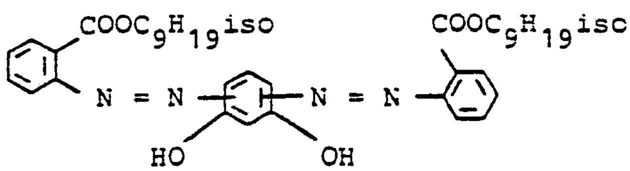

erhalten, der sich zum Färben von Treibstoffen, Heizölen, Lacken, Wachsen und Fetten sehr gut eignet.

## Beispiel 2

125 Teile Anthranilsäure-2-ethylhexylester und 132 Teile Anthranilsäureisononylester gelöst in 250 Raumteilen Toluol wurden zu einem Gemisch aus 250 Raumteilen 32 %iger Salzsäure und 1 000 Teilen Eis gegeben. Nach Zugabe von 70 Teilen Natriumnitrit in 200 Teilen Wasser wurde 1,5 Std. bei maximal 5 °C gerührt und überschüssiges Nitrit mit Amidosulfonsäure zerstört. Nach Zugabe von 55 Teilen Resorcin wurde mit Natriumacetat auf pH 4 abgepuffert, nach Beendigung der Kupplung mit 250 Raumteilen Toluol verdünnt, die organische Phase abgetrennt und mit Wasser gewaschen. Das Lösungsmitel wurde im Vakuum abdestilliert. Man erhielt so 292 Teile eines Farbstoffgemisches der Formel

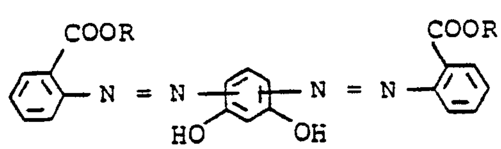

$R = CH_2-CH(C_2H_5)-C_4H_9$ und iso-$C_9H_{19}$

das sich zum Färben von Treibstoffen, Heizölen, Lacken, Wachsen und Fetten sehr gut eignet.

## Beispiel 3

381 Teile Anthranilsäuredodecylphenylester wurden analog Beispiel 1 bzw. 2 diazotiert und mit 55

Teilen Resorcin gekuppelt. Man erhielt 403 Teile des Farbstoffs der Formel

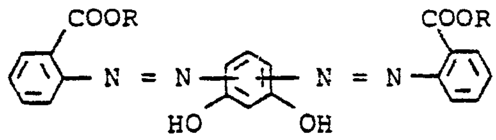

R = 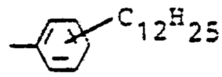

der sich zum Färben von Treibstoffen, Heizölen, Lacken, Wachsen und Fetten gut eignet.

Analog Beispiel 1-3 wurden die in Tabelle 1 aufgeführten Farbstoffe der Formel

D—N = N—K—N = N—D

hergestellt. Bei Verwendung von zwei unterschiedlichen Diazokomponenten entsteht das entsprechende Gemisch aus 3 verschiedenen Farbstoffen, dieser Fall ist in der Tabelle durch die Angabe der beiden Diazokomponenten gekennzeichnet.

Tabelle 1

| Bsp. | D | K |
|---|---|---|
| 4 | 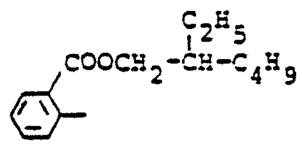 | 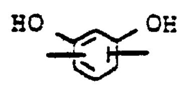 |
| 5 | 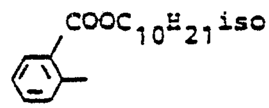 | " |
| 6 | 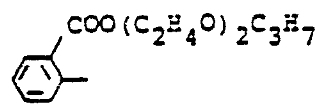 | " |
| 7 | 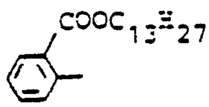 | " |
| 8 | 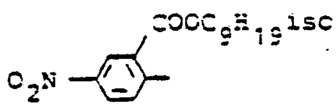 | " |
| 9 | 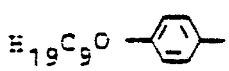 | " |
| 10 | 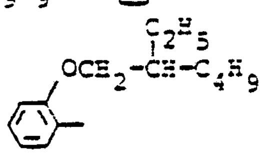 | 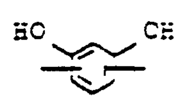 |
| 11 | 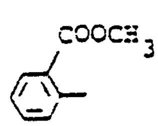 | 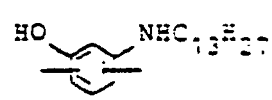 |
| 12 | 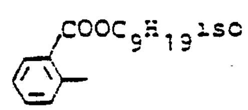 | " |
| 13 | 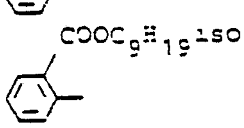 | 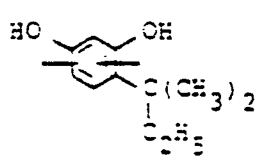 |

Tabelle 1 (Fortsetzung)

| Bsp. | $D_1$ | $D_2$ | K |
|---|---|---|---|
| 14 | 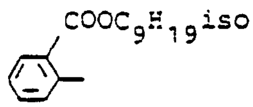 | 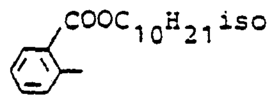 | 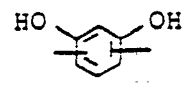 |
| 15 | " | 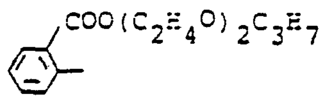 | " |
| 16 | " | 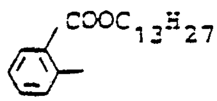 | " |
| 17 | 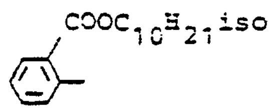 | " | " |
| 18 | 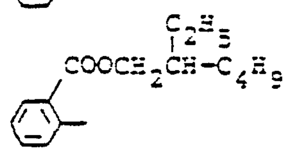 | " | " |
| 19 | 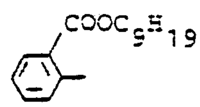 | 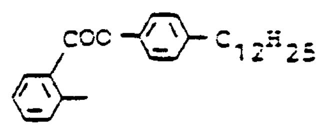 | " |
| 20 | " | 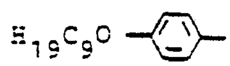 | " |

Beispiel 21

Je 48 Teile Anthranilsäure-n-butylester und Anthranilsäure-iso-butylester sowie je 52 Teile Anthranilsäure-n-pentyl-ester und Anthranilsäure-iso-pentylester wurden in 250 Raumteilen Toluol gelöst und mit 1 000 Teilen Eis und 250 Raumteilen 32 %iger Salzsäure versetzt. Die Diazotierung erfolgt durch Zugabe von 70 Teilen Natriumnitrit in 150 Teilen Wasser. Nach 1,5 Stunden wurde überschüssiges Nitrit mit wenig Amidosulfonsäure beseitigt. Nach Zugabe von 55 Teilen Resorcin wurde bei maximal 10 °C mit Natriumacetat ein pH-Wert von 4 eingestellt. Nach Beendigung der Kupplung wurde auf 60 °C erwärmt, die wäßrige Phase abgetrennt und die organische Phase zweimal mit warmem Wasser gewaschen. Die organische Phase wurde im Vakuum eingeengt. Man erhielt so 270 Teile des Farbstoffgemisches der Formel

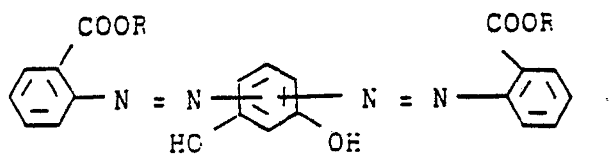

R = n- und i-$C_4H_9$, n- und i-$C_5H_{11}$, das sich zum Färben von Treibstoffen, Heizölen, Lacken, Wachsen und Fetten gut eignet.

**Patentansprüche**

1. Disazofarbstoffe der allgemeinen Formel I

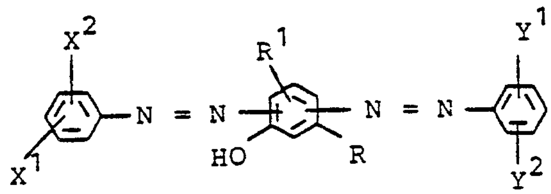

(I)

in der

R Hydroxy oder gegebenenfalls substituiertes Amino,

$R^1$ Wasserstoff oder $C_1$- bis $C_{12}$-Alkyl,

$X^1$ und $Y^1$ unabhängig voneinander eine Carbonester- oder Ethergruppe und

$X^2$ und $Y^2$ unabhängig voneinander Wasserstoff, Nitro oder Chlor sind.

2. Verbindungen gemäß Anspruch 1 der Formel

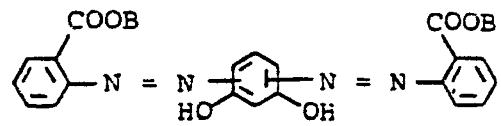

(Ia)

in der

B ein ggf. verzweigter $C_5$- bis $C_{15}$-, vorzugsweise $C_8$- bis $C_{15}$-Alkylrest, der noch durch Sauerstoff unterbrochen sein kann oder ein substituierter Phenylrest ist.

3. Verwendung der Verbindungen gemäß Anspruch 1 zum Färben von Mineralölprodukten, Lösungsmitteln oder Treibstoffadditiven.

**Claims**

1. A disazo dye of the general formula I

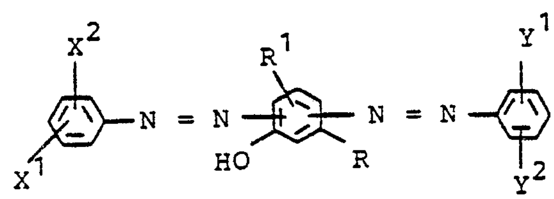

(I)

where

R is hydroxyl or unsubstituted or substituted amino,

$R^1$ is hydrogen or $C_1$-$C_{12}$-alkyl,

$X^1$ and $Y^1$ independently of one another are a carboxylic acid ester or ether group and

$X^2$ and $Y^2$ independently of one another are hydrogen, nitro or chlorine.

2. A compound as claimed in claim 1, of the formula

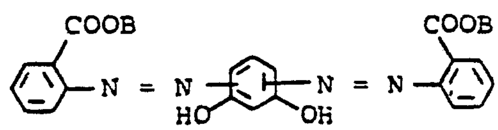

(Ia)

where

B is a straight-chain or branched alkyl radical which is of 5 to 15, preferably 8 to 15, carbon atoms and can also be interrupted by oxygen, or B is substituted phenyl.

3. The use of a compound as claimed in claim 1 for coloring petroleum products, solvents or engine fuel additives.

**Revendications**

1. Colorants disazoïques de formule générale

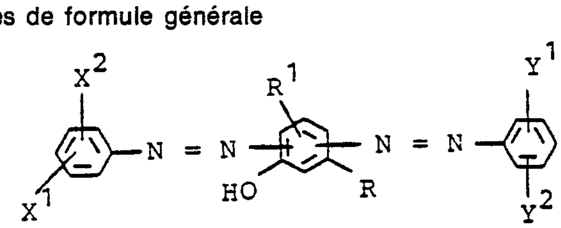

(I)

dans laquelle

R est un radical hydroxy ou un groupement amino éventuellement substitué,

$R^1$ est un atome d'hydrogène ou un radical alkyle en $C_1$ à $C_{12}$,

$X^1$ et $Y^1$, indépendamment l'un de l'autre, sont chacun un groupe ester carboxylique ou éther et

$X^2$ et $Y^2$, indépendamment l'un et l'autre, sont chacun un atome d'hydrogène, un groupement nitro ou un atome de chlore.

2. Composés selon la revendication 1 de formule

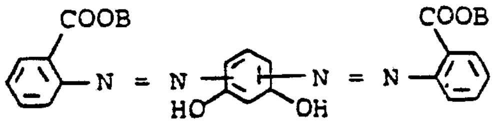

(Ia)

dans laquelle

B est un radical alkyle en $C_5$ à $C_{15}$, de préférence en $C_8$ à $C_{15}$, éventuellement ramifié, qui peut être encore interrompu par un atome d'oxygène, ou un radical phényle substitué.

3. Utilisation des composés selon la revendication 1 pour la coloration de produits pétroliers, de solvants ou d'additifs pour carburants.